# EUROPEAN PATENT SPECIFICATION

(11) **EP 3 274 057 B1**
(45) Date of publication and mention of the grant of the patent: **25.09.2019**
(21) Application number: 16719105.5
(22) Date of filing: 24.03.2016
(51) Int. Cl.: A62C 2/06, H02B 1/28

(54) **NON-COMBUSTIBLE CONSUMER UNITS**
NICHTBRENNBARE VERBRAUCHEREINHEITEN
UNITÉS DE CONSOMMATEUR NON COMBUSTIBLES

(30) Priority: 24.03.2015 GB 201504917
(43) Date of publication of application: 31.01.2018
(73) Proprietor: Intumescent Systems Limited, Barfrestone Dover Kent CT15 7JG (GB)
(72) Inventor: WARD, Derek Alfred, Dover Kent CT15 7JG (GB)
(74) Representative: Fry, David John
(86) International application number: PCT/GB2016/000060
(87) International publication number: WO 2016/151277

(56) References cited:
- EP-A1- 2 092 963
- DE-U1-202009 013 674
- US-A1- 2010 115 868

## Description

This invention relates to fire-proofed non-combustible consumer units which connect external mains electricity to fused electrical circuits of a house or other building. Furthermore, the invention relates to such a combustible unit in which a fire occuring within the unit is automatically extinguished.

### BACKGROUND TO THE INVENTION

Consumer units (also referred to as distribution boards) to which the invention relates comprise a species of distribution boards used principally in domestic premises which function to control the input of mains electricity to the premises and to distribute this electricity to circuits within the premises. Such units incorporate manually operable means for double-pole isolation of incoming circuit(s) and an assembly of fuses or circuit breakers for isolating individual electrical circuits operating within the premises.

Many consumer units provide limited protection for fuses and wiring present in the unit in the event of a fire. One consequence of such an event is that all electrical power within a premises can be lost within a relatively short period of time thereby endangering persons seeking to exit from the building and also fire fighters seeking to assist such people and to extinguish the fire.

It is also the case that most consumer units are not designed to prevent a fire occurring within the unit from spreading to adjoining areas of the premises. In such units, an internal fire can rapidly spread to other parts of the premises through the openings formed in the unit for the passage of electrical cabling to and from the unit interior. Documents DE202009013674 U1 and EP2092963

A1 disclose the use of intumescent materials in different applications.

In partial recognition of the above, regulation BS EN 61439-3 requires that from 1st January 2016 all consumer units and similar switchgear assemblies must be manufactured from a non-combustible material or be enclosed in an enclosure which is constructed from a non-combustible material.

This regulation effectively means that all existing consumer units not manufactured from a non-combustible material will either need to be replaced with ones produced from a suitable non-combustible material or housed within an enclosure produced from a suitable non-combustible material. Our patent application GB2532767 A provides such an enclosure.

Consumer units in accordance with the present invention not only meet the requirements of BS EN 61439-3 but are also electrically non-conductive and, in addition, prevent the spread of fire and/or smoke to adjoining areas of a premises.

The consumer unit in accordance with the invention further includes means operable automatically to extinguish a fire which occurs within a consumer unit.

### SUMMARY OF THE INVENTION

The invention provides a consumer unit produced from a non-combustible material whose inner surfaces are lined with a silicon cloth coated or lined on one side with a material which exfoliates in the presence of fire to seal all openings formed in the unit thereby preventing the spread of fire and/or smoke from the unit interior, as further defined in claim 1.

The non-combustible material is preferably a metallic material such as steel strip. Alternatively, the material may comprise a steel powder-coated with a non-combustible coating.

A sealed thermoplastic tube filled with a liquid extinguishant gas which is expelled from the tube in the event of a fire is positioned within the consumer unit.

The invention provides a consumer unit produced from a non-combustible material which, in use, includes openings through which electrical cabling can pass, the consumer unit being lined internally with one or more sheets or strips of silicon cloth coated or lined with an intumescent material which exfoliates in the event of fire to seal all such openings.

### BRIEF DESCRIPTION OF ONE EXAMPLE OF THE INVENTION

The invention will now be described by way of example only with reference to a consumer unit produced in accordance with the invention.

### DETAILED DESCRIPTION OF THE INVENTION

The exemplary consumer unit is typically produced from 1.2mm gauge steel strip and includes a housing closable by a lid attached to the housing by hinges. Conventionally, a support rail is located within the housing on which is mounted one or several fused elements.

Openings are formed in one or more of the side walls of the housing through which electric cables can pass to and from fused elements mounted on the support bar.

The inner side walls and base of the unit are all lined with sheets of electrically non-conductive silicon cloth thereby ensuring the consumer unit is at all times electrically inert.

The silicon cloth sheets are in turn lined with sheets of intumescent material which lie in contact with the base and walls of the consumer unit and which exfoliate in the presence of excessive heat or fire completely to seal off the side wall openings thereby preventing the spread of fire to adjoining areas of a premises.

Alternatively, the sheets of exfoliating material may be replaced with coatings of exfoliating material applied to the silicon sheets.

Positioned within the consumer unit is a sealed thermoplastics tube filled with a liquid extinguishant gas. In the event of a fire occuring within the comsumer unit, the tube will initially soften at its hottest point and then burst at around 70 degrees centigrade to release the extinguishant gas to extinguish the fire. Typically, the tube will be located immediately above the rail on which the fused elements are supported.

A typical extinguishant is that marketed as FE-25(RTM OF Dupont Fluroproducts).

In an alternative arrangement, each internal surface of each side wall and the base of the consumer unit is lined with two layers of Envirograf (RTM of the Applicant) felt paper adhered to the internal surfaces of the enclosure side walls and the internal surface of the base using an IA adhesive and a foiled Multigraf (RTM of the Applicant) layer of intumescent material wrapped in a plastic film.

Should a consumer unit as described be the subject of an internal electrical fire, the intumescent lining or coating will immediately exfoliate thereby closing the openings through which cables pass into and out of the unit so preventing the spread of smoke and fire to adjoining parts of the premises. At the same time, or shortly thereafter, the thermoplastics tube will burst to release the extinguishant gas to extinguish the fire. The silicon cloth ensures that the consumer unit is electrically non-conductive at all times.

It will be appreciated that the foregoing is merely exemplary of fire-proofed consumer units in accordance with the invention and that modifications can readily be made thereto without departing from the scope of the invention as set out in the appended claims.

## Claims

1. A consumer unit produced from a non-combustible material which, in use, includes openings through which electrical cabling can pass and is lined internally with one or more sheets or strips of silicon cloth coated or lined with an intumescent material which exfoliates in the event of fire to seal all such openings, the consumer unit being **characterised in that** a sealed thermoplastic tube filled with a liquid extinguishant gas is positioned within the consumer unit, the sealed tube operating to release the liquid extinguishant gas in the event of a fire occuring within the consumer unit to extinguish said fire.

2. A consumer unit as claimed in claim 1 **characterised in that** the non-combustible material is steel strip powder-coated with a non-combustible coating.

3. A consumer unit as claimed in claim 1 **characterised in that** the non-combustible material comprises steel powder-coated with a non-combustible coating.

## Patentansprüche

1. Verbrauchereinheit aus einem nichtbrennbaren Material, die, in Gebrauch, Öffnungen enthält, durch die elektrische Leitungen geführt werden können und die innen mit einem oder mehreren Bögen oder Streifen Silikontuch ausgekleidet sind, der bzw. die mit einem aufschäumenden Material beschichtet oder ausgekleidet ist bzw. sind, das sich im Brandfall abschält, um alle derartigen Öffnungen abzudichten, wobei die Verbrauchereinheit **dadurch gekennzeichnet ist, dass** ein mit einem flüssigen Löschgas gefüllter, abgedichteter, thermoplastischer Schlauch in der Verbrauchereinheit positioniert ist, wobei der abgedichtete Schlauch betrieben wird, um das flüssige Löschgas in einem in der Verbrauchereinheit auftretenden Brandfall freizusetzen, um das Feuer zu löschen.

2. Verbrauchereinheit nach Anspruch 1, **dadurch gekennzeichnet, dass** das nichtbrennbare Material ein mit einer nichtbrennbaren Beschichtung pulverbeschichteter Stahlstreifen ist.

3. Verbrauchereinheit nach Anspruch 1, **dadurch gekennzeichnet, dass** das nichtbrennbare Material mit einer nichtbrennbaren Beschichtung pulverbeschichteten Stahl umfasst.

## Revendications

1. Tableau électrique produit à partir d'un matériau non-combustible qui, en utilisation, inclut des ouvertures à travers lesquelles un câble électrique peut passer et est chemisé à l'intérieur avec une ou plusieurs feuilles ou bandes de tissu silicone enduites ou chemisées avec un matériau intumescent qui s'exfolie en cas d'incendie pour étanchéifier de telles ouvertures, le tableau électrique étant **caractérisé en ce qu'**un tube thermoplastique étanchéifié rempli d'un gaz extincteur liquide est positionné à l'intérieur du tableau électrique, le tube étanchéifié fonctionnant pour libérer le gaz extincteur liquide en cas d'incendie survenant à l'intérieur dudit tableau électrique pour éteindre ledit incendie.

2. Tableau électrique selon la revendication 1, **caractérisé en ce que** le matériau non-combustible est thermolaqué de bande d'acier avec un revêtement non-combustible.

3. Tableau électrique selon la revendication 1, **caractérisé en ce que** le matériau non-combustible comprend de l'acier thermolaqué avec un revêtement non-combustible.
